Europäisches Patentamt

European Patent Office

Office européen des brevets

(11) Veröffentlichungsnummer : **0 039 975**
**B1**

(12) EUROPÄISCHE PATENTSCHRIFT

(45) Veröffentlichungstag der Patentschrift :
11.04.84

(51) Int. Cl.³ : **G 11 B 17/04**

(21) Anmeldenummer : **81200487.7**

(22) Anmeldetag : **08.05.81**

(54) Vorrichtung zum Einführen und Auswerfen einer Diskette in oder aus einem Laufwerk.

(30) Priorität : **10.05.80 DE 3017970**

(43) Veröffentlichungstag der Anmeldung :
**18.11.81 Patentblatt 81/46**

(45) Bekanntmachung des Hinweises auf die Patenterteilung : **11.04.84 Patentblatt 84/15**

(84) Benannte Vertragsstaaten :
**CH DE FR GB IT LI**

(56) Entgegenhaltungen :
US-A- 3 890 643
US-A- 4 139 876
IBM TECHNICAL DISCLOSURE BULLETIN Band 20, Nr. 6, November 1977 New York, J. D. HALL, JR. et al. "Head Retraction Latch Mechanism" Seiten 2362 bis 2363
XEROX DISCLOSURE JOURNAL, Band 4, Nr. 2, März/April 1979 Stamford, Seiten 275 bis 276

(73) Patentinhaber : **Philips Patentverwaltung GmbH**
**Billstrasse 80**
**D-2000 Hamburg 28 (DE)**
**DE**
**N.V. Philips' Gloeilampenfabrieken**
**Groenewoudseweg 1**
**NL-5621 BA Eindhoven (NL)**
**CH FR GB IT LI**

(72) Erfinder : **Becker, Gerhard**
**Arbachstrasse 7**
**D-5908 Neunkirchen (DE)**

(74) Vertreter : **Wagener, Günter et al**
**Philips Patentverwaltung GmbH Billstrasse 80 Postfach 10 51 49**
**D-2000 Hamburg 28 (DE)**

EP 0 039 975 B1

Jouve, 18, rue St-Denis, 75001 Paris, France

# Vorrichtung zum Einführen und Auswerfen einer Diskette in oder aus einem Laufwerk

Die Erfindung betrifft eine Vorrichtung zum Einführen und Auswerfen einer Diskette in oder aus einem Laufwerk nach dem Oberbegriff des Anspruchs 1.

Es ist bekannt Informationsdaten in sogenannten Disketten zu speichern. Unter Disketten versteht man eine kleine flexible Magnetplatte, die in einer Schutzhülle eingeschlossen ist. Zum Einspannen der Diskette in ein Antriebswerk, auch Laufwerk genannt, ist das Zentrum der Schutzhülle mit Aufnahmelöchern versehen. Weiterhin befindet sich auf beiden Seiten der Schutzhülle jeweils eine radial angeordnete Öffnung, durch die der Aufnahme- und/oder Wiedergabekopf auf die Mangetplatte gesetzt wird.

Beim Einführen der Diskette in das Laufwerk und auch beim Auswerfen derselben muss der Magnetkopf von der Magnetplatte so weit angehoben werden, dass er nicht hinter den Öffnungskanten der Schutzhülle hängenbleibt. Es muss also entweder die Diskette ausreichend abgesenkt oder der Magnetkopf entsprechend angehoben werden.

Aus der US-PS 3 890 643 ist eine Vorrichtung bekannt, bei der die Diskette um einen hinteren Drehpunkt abgeschwenkt wird. Um die Diskette aus dem Laufwerk herauszunehmen, ist durch Verschieben einer Klappe der Einführschlitz zu öffnen. Dabei wird die Antriebsvorrichtung mit der Diskette verschwenkt, so dass einerseits die Klemmvorrichtung gelöst wird und andererseits ein Schieber freigegeben wird, der durch Federkraft gegen die Hinterkante der Diskette greift und diese so weit mitnimmt, dass sie von aussen ergriffen werden kann. Beim Einführen der Diskette erfolgt der umgekehrte Weg indem mit der Diskette der Schieber zurückgeschoben wird und die Auswurffeder gespannt wird. Beim Schliessen des Einführschlitzes wird durch Verschwenken des Laufwerkes der Schieber zur Entlastung der Diskette arretiert.

Diese Anordnung ist schwergängig, da beim Schliessen des Einführschlitzes nicht nur die Verschlussklappe entgegen einer Federkraft bewegt werden muss, sondern auch das ganze Gewicht der Antriebsvorrichtung. Es besteht daher die Gefahr, dass das gesamte Gerät, in dem das Laufwerk eingebaut ist, dann nicht mehr standfest ist, sondern zum Einführen und Auswerfen einer Diskette gesondert festgehalten werden muss. Ausserdem ist die Diskette soweit abzusenken, dass der Mangetkopf mit Sicherheit sich ausserhalb des Bereiches der Diskette befindet. Dies führt zu grosser Bauhöhe des Laufwerkes.

Der Erfindung liegt die Aufgabe zugrunde, eine Vorrichtung zum Einführen und Auswerfen einer Diskette zu schaffen, bei der nur geringe Kräfte auf die Verschlussklappe auszuüben sind, die darüberhinaus auch überwiegend nur in Längsrichtung des Laufwerkes wirken, und die einfach in ihrem Aufbau gestaltet ist, so dass eine flache Bauweise des gesamten Laufwerkes möglich ist.

Diese Aufgabe wird durch die im kennzeichnenden Teil des Anspruchs 1 angegebene Vorrichtung gelöst.

Eine derartige Vorrichtung hat den Vorteil, dass mit dem automatischen Auswurf der Diskette auch gleichzeitig und zwangsläufig das Abheben des Magnetkopfes erfolgt. Ausserdem ist durch die beidseitige Anordnung der Auflaufschrägen sichergestellt, dass bei unbeabsichtigtem manuellem Eingriff, etwa beim Einschieben einer Diskette und manuell geschlossenen Schreib-Lese-Kopf, ebenfalls rechtzeitig der obere Kopfhebel abgehoben und ein Verbiegen dieses empfindlichen Teiles ausgeschlossen ist.

Eine Weiterbildung der Erfindung besteht darin, dass die Arretiervorrichtung für den Auswurfschieber aus einem monostabilen schwenkbaren Bauteil besteht, dass die Auslösung der Arretiervorrichtung durch eine — nur in einer Richtung wirkenden und von der Verschlussklappe verschiebbare — Klinkenvorrichtung erfolgt und dass die Klinkenvorrichtung durch Schliessen der Verschlussklappe in eine vorbereitete Auslösestellung für die Arretiervorrichtung verschoben ist.

Besonders raumsparend und einfach im Aufbau ist es, wenn gemäß einer Weiterbildung der Erfindung die Arretiervorrichtung als ein um eine Achse drehbarer Umlenkhebel ausgebildet ist, der einerseits in den Wirkbereich des Auswurfschiebers und andererseits in den Wirkbereich einer Klinkenvorrichtung reicht. Die Klinkenvorrichtung ist dabei direkt von der Bewegung der Verschlussklappe abhängig.

Durch die Verwendung einer verschiebbaren Stange, durch die die Bewegung der Verschlussklappe auf die Klinkenvorrichtung übertragen wird, ist es möglich, über einen Stellring und einen davon betätigten Mikroschalter die Stellung der Verschlussklappe elektrisch anzuzeigen. Wird der Mikroschalter mit einem zusätzlichen Fühlhebel versehen, der in den Bereich der Diskette hineinragt, so ist es möglich den gleichen Mikroschalter auch zur gleichzeitigen Anzeige dazu zu verwenden, ob eine Diskette eingelegt ist oder nicht.

Die Erfindung wird im folgenden anhand eines Ausführungsbeispieles näher erläutert. Es zeigen :

Figur 1 Die Vorrichtung nach der Erfindung bei eingeschobener Diskette und geschlossener Verschlussklappe,

Figur 2 Die Vorrichtung nach Fig. 1 bei sich öffnender Verschlussklappe,

Figur 3 Seiten- und Vorderansicht der Teile für die Magnetkopfanhebung,

Figuren 4a bis 4d Die Einrichtung zur Anzeige der Stellungen der Verschlussklappe und des Vorhandenseins der Diskette,

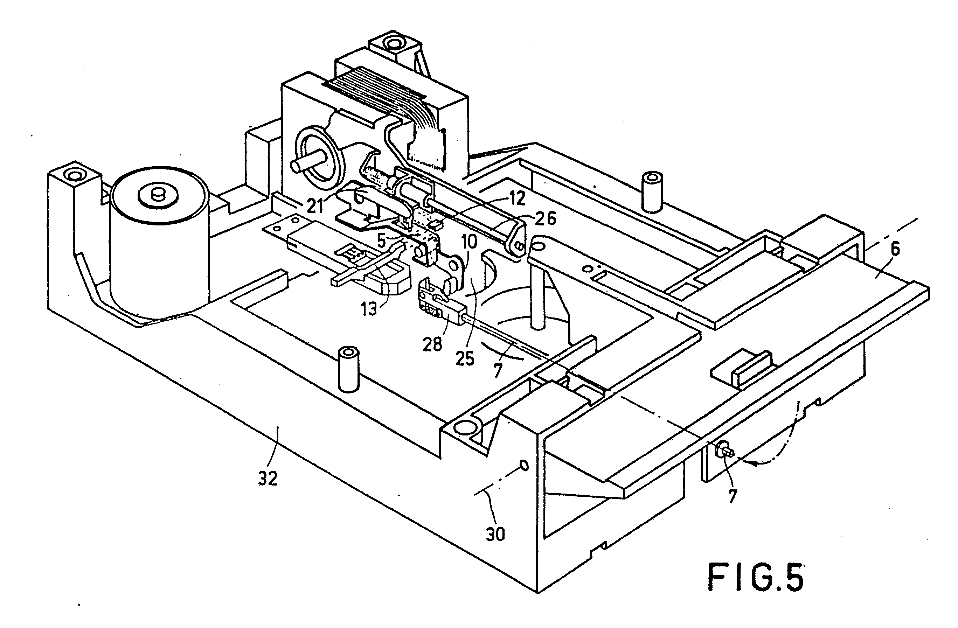

Figur 5 Eine perspektivische Darstellung eines Laufwerkes mit einer Vorrichtung nach den Fig. 1-4 und

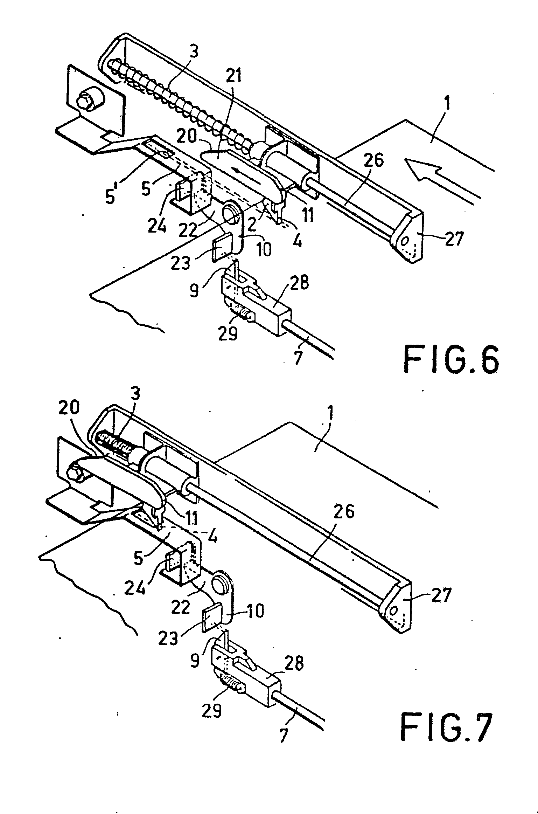

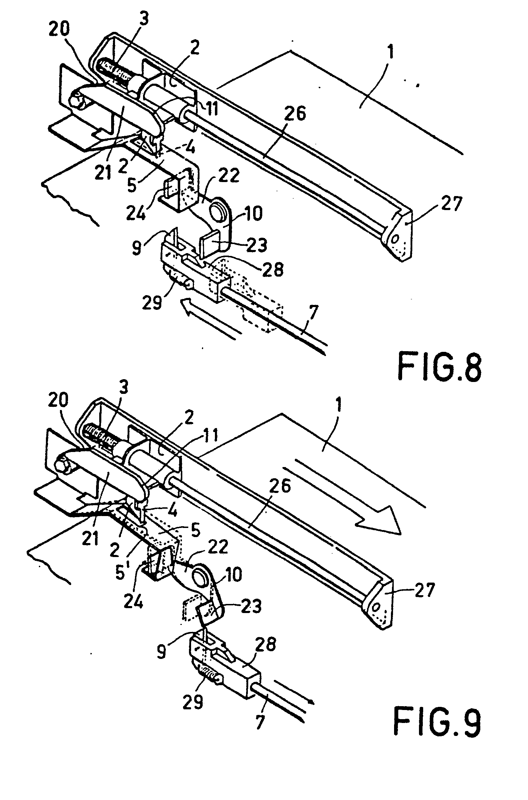

Figuren 6-9 Eine perspektivische Darstellung der Vorrichtung nach den Fig. 1-4 beim Einschieben einer Diskette, beim Verriegeln der Vorrichtung, beim Schliessen der Verschlussklappe und beim Wiederöffnen der Verschlussklappe.

Bei dem dargestellten Ausführungsbeispiel sind nur die zum Verständnis der Erfindung unbedingt erforderlichen Einzelteile des Laufwerkes einer Diskette dargestellt.

Der Zusammenbau der einzelnen Teile des Laufwerkers ist allgemein bekannt und würde der zu beschreibenden Wirkungsweise der Erfindung nur nachträglich sein.

Im normalen Zustand befindet sich der Auswurfschieber 2 mit seiner Vorderseite am Anschlag 27. Wird bei geöffneter Verschlussklappe 6 eine Diskette 1 in den Einführschlitz geschoben, so trifft die Vorderkante der Diskette 1 auf den Auswurfschieber 2 und nimmt diesen mit. Dabei wird der Auswurfschieber 2 auf der Welle 26 entgegen der Kraft der Feder 3 verschoben bis die Nase 4 die Rastfeder 5 zunächst verschwenkt und hinter der Rastnase 5' der Rastfeder 5 zu liegen kommt. Die Rastfeder 5 ist an dem Laufwerk befestigt.

Wird nun die Verschlussklappe 6 in Pfeilrichtung um die Schwenkachse 30 geschwenkt und verschlossen, so trifft kurz vor dem Verschliessen die Verschlussklappe 6 auf die Stange 7 auf und nimmt diese entgegen der Kraft der Feder 8 mit. Die Feder 8 ist zwischen dem Gehäuse 32 und einem auf der Stange 7 befestigten Stellring 15 eingespannt. Am freien Ende der Stange 7 ist eine Klinkenvorrichtung 28 befestigt, die eine schwenkbare Klinke 9 besitzt. Der Drehpunkt ist zur Stange so angeordnet, dass die Klinke bei Bewegung der Stange 7 in Pfeilrichtung durch die Arretiervorrichtung 10 entgegen der Rückholfeder 29 verschwenkt wird und bei geschlossener Verschlussklappe 6 wieder seine ursprüngliche Stellung hinter der Arretiervorrichtung einnimmt.

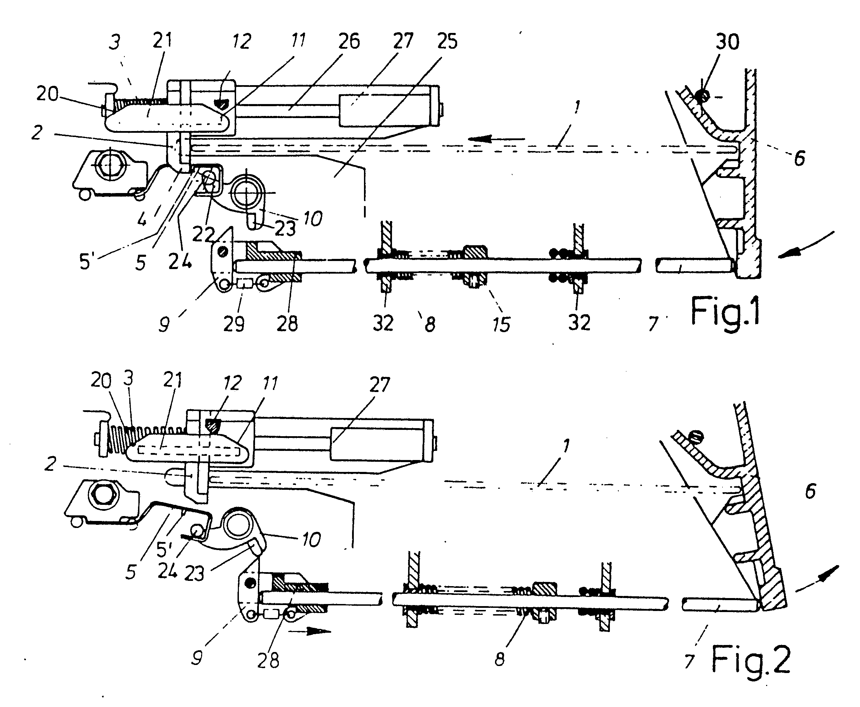

Soll nun die Diskette ausgeworfen werden, so ist in bekannter Weise die Verschlussklappe 6 zu öffnen. Dieser Vorgang ist in Fig. 2 dargestellt. Durch Bewegen der Verschlussklappe 6 in Pfeilrichtung wird die Stange 7 freigegeben, so dass nunmehr durch die Feder 8 die Klinkenvorrichtung 28 in Pfeilrichtung bewegt wird. Dabei greift die Klinke 9 hinter den einen Arm 23 der als Umlenkhebel 10 ausgebildeten Arretiervorrichtung und verschwenkt diesen Hebel entgegen einer nicht dargestellten Feder entgegen dem Uhrzeigersinn. Dadurch wird auch der an den anderen Arm 22 des Umlenkhebels 10 befestigte Ansatz 24 entgegen dem Uhrzeiger bewegt. Da dieser Ansatz von der Rastfeder 5 umgeben ist, nimmt er die Rastfeder 5 mit. Der Rastansatz 5' wird aus dem Bereich der Nase 4 des Auswurfschiebers 2 herausgebracht und dieser freigegeben. Der Auswurfschieber 2 kann nun der Kraft der Feder 3 folgen bis er mit seiner Vorderkante gegen den Anschlag 27 anschlägt. Dadurch ist die Diskette 1 soweit aus dem Laufwerk herausgeführt, dass sie sehr leicht von Hand entnommen werden kann. Während der Bewegung des Auswurfschiebers 2 wird auch dessen Hebelarm 21 mitbewegt. Dieser Hebelarm 21 kommt dabei in den Bereich einer Traverse 12, die am Kopfhebel 13 angeordnet ist. Die Traverse 12 gleitet entlang der Auflaufschräge 11 nach oben und hebt dadurch den Magnetkopf 14 aus dem Bereich der Diskette heraus. Der Hebearm 21 besitzt auf seiner Rückseite ebenfalls eine Ablaufschräge 20 durch die sichergestellt ist, dass auch beim Einschieben der Diskette 1 der Magnetkopf abgeschwenkt wird unabhängig davon, welche Stellung der Magnetkopf durch äussere Manipulation in diesem Zeitpunkt einnimmt.

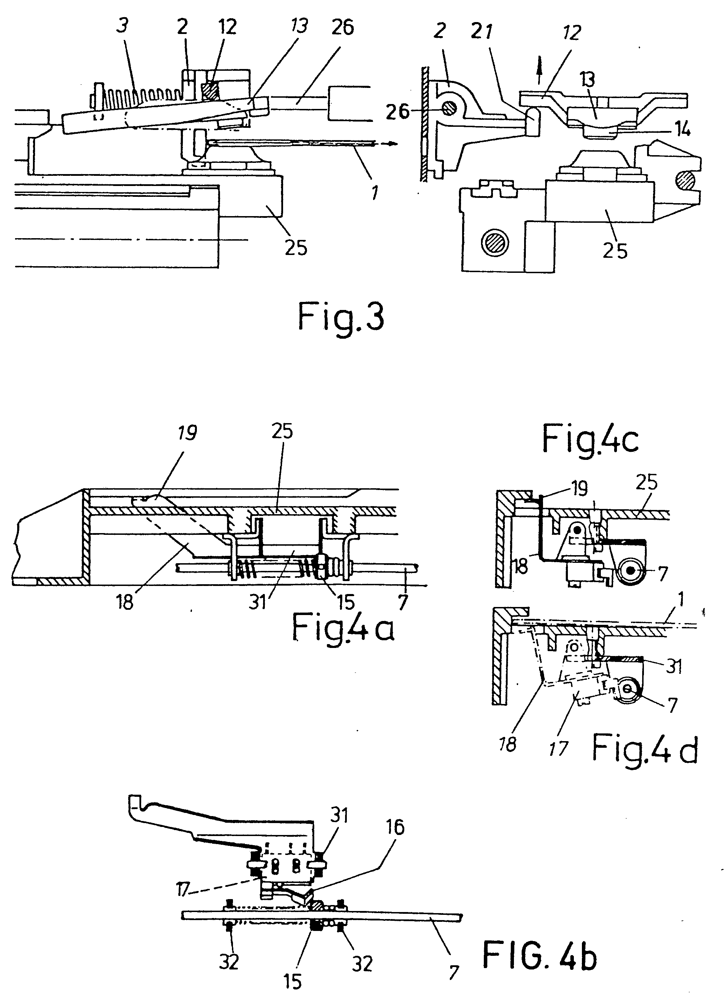

Die Längsbewegung der Stange 7 kann dazu verwendet werden, die Stellung der Verschlussklappe 6 und/oder das Vorhandensein einer Diskette 1 im Laufwerk elektrisch anzuzeigen. Hierzu wird der Stellring 15 Herangezogen. Wie die Figuren 4a bis 4d zeigen, wird in den Wirkbereich des Stellringes 15 der Hebelarm 16 eines Mikroschalters 17 gebracht. Beim Verschliessen der Verschlussklappe 6, d. h. Verschieben der Stange 7 nach links, wird der Hebelarm 16 verschwenkt, der seinerseits den Mikroschalter 17 in bekannter Weise betätigt. Je nach Aufgabenstellung kann dabei der Hebelarm 16 nur kurzzeitig durch den Stellring jeweils in beiden Bewegungsrichtungen der Stange 7 betätigt werden. Es ist auch möglich, den Hebelarm 16 so auszubilden, dass der Mikroschalter 17 in der einen Bewegungsrichtung der Stange 7 dauernd betätigt und in der anderen Bewegungsrichtung dauernd in Ruhestellung gehalten ist.

Weiterhin ist es auch möglich, das Lager 31 des Mikroschalters 17 mit einer Schwinge 18 zu versehen, deren äusserer Fühlhebel 19 in den Bereich der Diskette 1 eingreift. Wird nun eine Diskette eingeführt, so wird über den Fühlhebel 19 die Schwinge 18 und damit der Mikroschalter 17 verschwenkt (gestrichelte Lage in Fig. 4d). Der Hebelarm 16 wird dadurch in den Wirkbereich des Stellringes 15 gebracht, so dass bei Bewegung der Stange 7 der Stellring 15 den Mikroschalter betätigt und die eingelegte Diskette angezeigt wird.

Fig. 4c zeigt die Stellung der Schwinge 18, wenn keine Diskette eingelegt ist. Der Hebelarm 16 liegt nicht in dem Wirkbereich des Stellringes 15, so dass die Bewegung der Stange 7 auf den Mikroschalter unwirksam bleibt.

## Ansprüche

1. Vorrichtung zum Einführen und Auswerfen einer Diskette in oder aus einem Laufwerk mit einer die Einführöffnung für die Diskette verschliessenden schwenkbaren Verschlussklappe, einem von der Diskette abhebbaren und auf diese auf absetzbaren Magnetkopf, der auf einem senkrecht zur Drehachse der Diskette angeordneten Kopfhebel bezüglich der Drehachse radial verschiebbar angeordnet ist, und einem Auswurfschieber, der durch Einführen der Diskette entgegen der Kraft einer Feder einer Arretiervorrichtung in eine Arretierstellung verschiebbar und verriegelbar und durch Öffnen der Verschlussklappe entriegelbar ist und dadurch die Diskette auswirft, dadurch gekennzeichnet, dass dem Auswurfschieber ein Hebelarm zugeordnet ist, der mit seiner Längsausdehnung in Richtung der Bewegung des Auswurfschiebers (2) angeordnet ist und der an seinen beiden Enden jeweils eine Auflaufschräge besitzt, auf denen eine Traverse des Kopfhebels während der Einführ- und/oder Auswurfbewegung der Diskette aufläuft und dadurch den Magnetkopf von der Diskette abhebt oder auf diese absetzt.

2. Vorrichtung nach Anspruch 1, dadurch gekennzeichnet, dass die Arretiervorrichtung für den Auswurfschieber aus einem monostabilen schwenkbaren Bauteil besteht, dessen monostabile Stellung die Arretierstellung ist, und dass die Verschwenkung der Arretiervorrichtung in die auslösende labile Stellung durch eine nur in Auslöserichtung wirkenden und von der Verschlussklappe verschiebbaren Klinkenvorrichtung erfolgt.

3. Vorrichtung nach Anspruch 2, dadurch gekennzeichnet, dass die Klinkenvorrichtung durch Schliessen der Verschlussklappe entgegen einer Federkraft in eine vorbereitende Auslösestellung für die Arretiervorrichtung verschiebbar ist.

4. Vorrichtung nach den Ansprüchen 2 oder 3, dadurch gekennzeichnet, dass die Klinkenvorrichtung auf dem einen Ende einer entgegen einer Feder verschiebbaren Stange befestigt ist und eine Klinke besitzt, die in der einen Bewegungsrichtung (Auslöserichtung) der Stange nachgiebig und in der anderen Bewegungsrichtung der Stange unnachgiebig gelagert ist, und dass die Stange beim Schliessen der Verschlussklappe in der einen Bewegungsrichtung und beim Öffnen der Verschlussklappe durch die Feder in der anderen Bewegungsrichtung verschiebbar ist.

5. Vorrichtung nach Anspruch 4, dadurch gekennzeichnet, dass auf der Stange ein Stellring angeordnet ist, der durch die Bewegung der Stange einen Mikroschalter öffnet bzw. schliesst.

6. Vorrichtung nach Anspruch 5, dadurch gekennzeichnet, dass das Lager des Mikroschalters einen Fühlhebel besitzt der in den Bereich der Diskette reicht und bei Vorhandensein einer Diskette den Mikroschalter in den Bereich des Stellringes schwenkt.

7. Vorrichtung nach den Ansprüchen 1 bis 6, dadurch gekennzeichnet, dass die Arretiervorrichtung als ein um eine Achse drehbarer Umlenkhebel ausgebildet ist, dessen einer Arm mit einem Ansatz bis in den Bewegungsbereich des Auswurfschiebers und dessen anderer Arm bis in den Bewegungsbereich der Klinkenvorrichtung reicht, und das die monostabile Stellung des Umlenkhebels durch Federkraft erreicht wird.

8. Vorrichtung nach Anspruch 7, dadurch gekennzeichnet, dass die Federkraft für die Monostabile Stellung des Umlenkhebels durch eine Betätigungsfeder eines bzw. des Mikroschalters erreicht ist, der das Vorhandensein einer eingeführten Diskette anzeigt.

## Claims

1. A device for loading and ejecting a diskette into or from a drive mechanism with a pivotable closing member which closes the receiving slot for the diskette, a magnetic head which can be lifted off the diskette and which is engageable therewith, which head is arranged on a head lever which extends perpendicularly to the axis of rotation of the diskette so as to be movable in a radial direction relative to the axis of rotation, and an ejection slide which by insertion of the diskette against the force of a spring of a latching device can be moved into and latched in a latched position and can be unlatched by opening the closing member and thereby ejects the diskette, characterized in that the ejection slide is associated with a lever arm, whose longitudinal axis extends in the direction of movement of the ejection slide, and which on both ends is provided with an inclined surface which, during the insertion or ejection movement of the diskette, engages a cross-arm of the head lever and thereby lifts the magnetic head off the diskette or causes sid head to co-operate with the diskette.

2. A device as claimed in Claim 1, characterized in that the latching device for the ejection slide comprises a monostable pivotable member, whose monostable poistion is the latched position, and that the latching device is pivoted into the unstable release position by means of a pawl device which acts in one release direction only and which is movable by the closing member.

3. A device as claimed in Claim 2, characterized in that by closing the closing member against spring force the pawl device can be moved into a ready-to-release position for the latching device.

4. A device as claimed in Claim 2 or 3, characterized in that the pawl device in mounted on the one end of a rod which is movable against a spring and comprises a pawl which in one direction of movement (release direction) of the rod is freely movable and in the other direction of movement of the rod is not freely movable and in the other direction of movement of the rod is not freely movable, and that when the closing member is closed the rod is movable in the one direction of movement and when the closing member is opened the rod is movable in the other direction of movement by the spring.

5. A device as claimed in Claim 4, characterized in that an actuating ring is arranged on the rod, which ring opens or closes a microswitch by the movement of the rod.

6. A device as claimed in Claim 5, characterized in that the mount of the microswitch comprises a sensing lever, which extends into the region of the diskette and if a diskette is present pivots the microswitch into the range of movement of the actuating ring.

7. A device as claimed in Claims 1 to 6, characterized in that the latching device comprises a shift lever which is pivotable about an axis, a projection on one arm of said lever extending into the range of movement of the ejection slide and the other arm of said lever extending into the range of movement of the pawl device, and that the monostable position of the shift lever is obtained by spring force.

8. A device as claimed in Claim 7, characterized in that the spring force for the monostable position of the shift lever is obtained by the actuating spring of a or the microswitch which indicates the presence of an inserted diskette.

## Revendications

1. Dispositif pour l'introduction d'une disquette dans un appareil d'entraînement et pour son éjection de celui-ci comportant un volet de fermeture pivotant fermant l'ouverture d'introduction pour la disquette, une tête magnétique pouvant être soulevée de la disquette et être posée sur celle-ci qui est montée sur un levier de tête disposé perpendiculairement à l'axe de rotation de la disquette et pouvant être déplacé radialement par rapport à cet axe de rotation, et un coulisseau d'éjection qui, à la suite de l'introduction de la disquette, peut être déplacé à l'encontre de la sollicitation d'un ressort d'un dispositif d'arrêt dans une position d'arrêt, peut être verrouillé dans cette position et peut être déverrouillé par l'ouverture du volet de fermeture pour éjecter ainsi la disquette, caractérisé en ce qu'un bras de levier est associé au coulisseau d'éjection, est aligné longitudinalement dans la direction du déplacement du coulisseau d'éjection et est pourvu, à chacune de ses deux extrémités, d'une rampe, une traverse du levier de tête montant sur ces rampes pendant le mouvement d'introduction et/ou d'éjection de la disquette et soulevant ainsi la tête magnétique de la disquette ou la posant sur celle-ci.

2. Dispositif suivant la revendication 1, caractérisé en ce que le dispositif d'arrêt pour le coulisseau d'éjection est formé d'un élément pivotant monostable dont la position monostable est la position d'arrêt et que le pivotement du dispositif d'arrêt dans la position de déclenchement instable s'effectue à l'intervention d'un dispositif à cliquet qui n'agit que dans la direction de déclenchement et qui peut être déplacé par le mouvement du volet de fermeture.

3. Dispositif suivant les revendications 1 et 2 prises ensemble, caractérisé en ce que le dispositif à cliquet peut être déplacé par la fermeture du volet de fermeture à l'encontre de la sollicitation d'un ressort dans une position de déclenchement préétablie pour le dispositif d'arrêt.

4. Dispositif suivant la revendication 2 ou 3, caractérisé en ce que le dispositif à cliquet est fixé sur la première extrémité d'une tige pouvant coulisser à l'encontre de la sollicitation d'un ressort et comporte un cliquet qui peut céder dans la première direction de déplacement (direction de déclenchement) de la tige et qui est monté de manière à ne pas céder dans l'autre direction de déplacement de la tige et que la tige peut être déplacée, lors de la fermeture du volet de fermeture dans la première direction de déplacement et lors de l'ouverture du volet de fermeture par le ressort dans l'autre direction de déplacement.

5. Dispositif suivant la revendication 4, caractérisé en ce qu'une bague de positionnement est montée sur la tige et ouvre ou ferme un microcommutateur à la suite du déplacement de la tige.

6. Dispositif suivant la revendication 5, caractérisé en ce que le palier du microcommutateur comporte un palpeur qui s'étend dans le domaine de la disquette et qui, lorsqu'une disquette est présente, fait pivoter le microcommutateur dans le domaine de la bague de positionnement.

7. Dispositif suivant l'une quelconque des revendications 1 à 6, caractérisé en ce que le dispositif d'arrêt a la forme d'un levier de renvoi pouvant pivoter autour d'un axe, un bras du levier de renvoi s'étendant par une saillie dans le domaine de déplacement du coulisseau d'éjection et son autre bras s'étendant jusque dans le domaine de déplacement du dispositif à cliquet, et que la position monostable du levier de renvoi est atteinte sous la sollicitation d'un ressort.

8. Dispositif suivant la revendication 7, caractérisé en ce que la force de ressort pour la position monostable du levier de renvoi est fournie par un ressort d'actionnement d'un microcommutateur ou du microcommutateur qui indique la présence d'une disquette introduite.

Fig.1

Fig.2

Fig.3

Fig.4a

Fig.4c

Fig.4d

FIG.4b

FIG.5

FIG.6

FIG.7

4

**FIG.8**

**FIG.9**